(19) Europäisches Patentamt European Patent Office Office européen des brevets

(11) **EP 3 605 865 B1**

(12) **EUROPEAN PATENT SPECIFICATION**

(45) Date of publication and mention
of the grant of the patent:
**29.03.2023 Bulletin 2023/13**

(21) Application number: **17917271.3**

(22) Date of filing: **11.07.2017**

(51) International Patent Classification (IPC):
**H04B 7/06** (2006.01) **H04B 1/04** (2006.01)
**H04B 1/525** (2015.01)

(52) Cooperative Patent Classification (CPC):
**H04B 1/0475; H04B 1/525**

(86) International application number:
**PCT/CN2017/092491**

(87) International publication number:
**WO 2019/010630 (17.01.2019 Gazette 2019/03)**

(54) **SIGNAL CORRECTION METHOD AND SIGNAL CORRECTION SYSTEM**

SIGNALKORREKTURVERFAHREN UND SIGNALKORREKTURSYSTEM

PROCÉDÉ DE CORRECTION DE SIGNAL ET SYSTÈME DE CORRECTION DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2020 Bulletin 2020/06**

(73) Proprietor: **Huawei Technologies Co., Ltd.
Longgang District
Shenzhen, Guangdong 518129 (CN)**

(72) Inventors:
• **WANG, Junpeng
Shenzhen
Guangdong 518129 (CN)**
• **WANG, Wei
Shenzhen
Guangdong 518129 (CN)**
• **JI, Tengteng
Shenzhen
Guangdong 518129 (CN)**
• **PANG, Yanzhao
Shenzhen
Guangdong 518129 (CN)**

(74) Representative: **Gill Jennings & Every LLP
The Broadgate Tower
20 Primrose Street
London EC2A 2ES (GB)**

(56) References cited:
EP-A1- 1 628 394        WO-A1-2017/080492
WO-A1-2017/080492    CN-A- 101 868 053
CN-A- 102 882 818      CN-A- 104 158 552
CN-A- 104 580 060      GB-A- 2 359 678
US-A1- 2004 132 424    US-A1- 2006 236 188

**Description**

**TECHNICAL FIELD**

Embodiments of this application relate to the communications field, and in particular, to a signal correction method and a signal correction system.

**BACKGROUND**

In recent years, with rapid development of wireless communications technologies, wireless communications system products have been increasingly popular, and have become an important part of development of today's human information society. A radio frequency receiver is located at the forefront of a wireless communications system. A structure and performance of the radio frequency receiver directly affect an entire communications system in an electronic product world. Optimizing a design structure and selecting a proper manufacturing process to increase a price/performance ratio of a system is a direction pursued by radio frequency engineers. With characteristics of a small size, low costs, and ease of monolithic integration, a zero (near zero) intermediate frequency system has received widespread attention in the wireless communications field. However, due to the characteristics such as the small size and the monolithic integration of the zero (near zero) intermediate frequency system, local oscillator leakage and image leakage always occur in the zero (near zero) intermediate frequency system. Leakage of a local-frequency signal and leakage of an image signal may cause large residues of the local-frequency signal and the image signal, and may further deteriorate a signal-to-noise ratio of a signal of a communications unit or affect another communications unit.

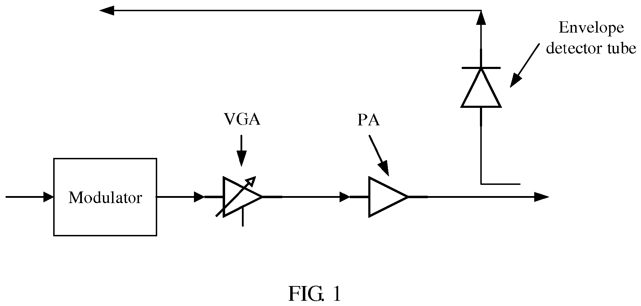

Currently, a method shown in FIG 1 is usually used to resolve this problem. The link includes a modulator, a variable gain amplifier (variable gain amplifier, VGA for short), a power amplifier (power amplifier, PA for short), and an envelope detector tube behind the PA. The modulator is configured to modulate an input signal to obtain a modulated signal. The VGA and the PA are configured to adjust a power gain of the modulated signal, and then the PA transmits the modulated signal. The envelope detector tube samples envelope information output by the modulator, to extract corrected information, and then performs correction by using a quadrature modulation compensation (quadrature modulation compensation, QMC for short) algorithm.

However, in this method, that the VGA and the PA adjust the gain of the modulated signal output by the modulator is a dynamic process. In the adjustment process, power of the modulated signal output by the PA may exceed operating power of the envelope detector tube, and consequently the envelope detector tube cannot work normally. WO2017/080492 discloses a device for correcting a local oscillator leakage signal, including adjusting a DC component of a quadrature signal at an input end of a mixer in real time so as to reduce local oscillator leakage.

**SUMMARY**

Embodiments of this application provide a signal correction method and a signal correction system, to compensate for a dynamic gain of a modulated signal at the behind of a link, so that power of the modulated signal meets operating power of the envelope detector. This ensures that the envelope detector can work continuously normally, thereby implementing quadrature modulation compensation on the modulated signal The present invention is defined by the features of the independent claims. Further embodiments are disclosed in the dependent claims.

**BRIEF DESCRIPTION OF DRAWINGS**

FIG 1 is a schematic diagram of a prior-art technology according to an embodiment of this application;
FIG 2 is a schematic diagram of an embodiment of a signal correction method according to an embodiment of this application;
FIG 3 is a schematic diagram of a signal correction system according to an embodiment of this application;
FIG 4 is a schematic diagram of another embodiment of a signal correction method according to an embodiment of this application;
FIG 5 is a schematic diagram of a signal correction system according to an embodiment of this application;
FIG 6 is a schematic diagram of an embodiment of a signal correction system according to an embodiment of this application; and
FIG 7 is a schematic diagram of another embodiment of a signal correction system according to an embodiment of this application.

**DESCRIPTION OF EMBODIMENTS**

Embodiments of this application provide a signal correction method and a signal correction system, to compensate for a dynamic gain of a modulated signal at the behind of a link, so that power of the modulated signal meets operating power of the envelope detector tube. This ensures that the envelope detector tube can work continuously normally, thereby implementing quadrature modulation compensation on the modulated signal.

In the specification, claims, and accompanying drawings of this application, terms "first", "second", "third", "fourth", and so on (if any) are intended to distinguish between similar objects, but do not necessarily indicate a specific order or sequence. It should be understood that the data termed in such a way are interchangeable in proper circumstances so that the embodiments described herein can be implemented in an order other than the order illustrated or described herein. Moreover, the terms "include", "contain" and any variants thereof is intended to cover the non-exclusive inclusion, for example, a process, method, system, product, or device that includes a list of steps or units is not necessarily limited to those steps or units listed expressly, but may include other steps or units not expressly listed or inherent to such a process, method, system, product, or device.

In recent years, with rapid development of wireless communications technologies, wireless communications system products have been increasingly popular, and have become an important part of development of today's human information society. A radio frequency receiver is located at the forefront of a wireless communications system. A structure and performance of the radio frequency receiver directly affect an entire communications system in an electronic product world. Optimizing a design structure and selecting a proper manufacturing process to increase a price/performance ratio of a system is a direction pursued by radio frequency engineers. With characteristics of a small size, low costs, and ease of monolithic integration, a zero (near zero) intermediate frequency system has received widespread attention in the wireless communications field. However, due to the characteristics such as the small size and the monolithic integration of the zero (near zero) intermediate frequency system, local oscillator leakage and image leakage always occur in the zero (near zero) intermediate frequency system. The local oscillator leakage may cause interference to a signal in a neighboring channel. Currently, a method shown in FIG 1 is usually used to resolve this problem. The link includes a modulator, a VGA, a PA, and an envelope detector tube behind the PA. The modulator is configured to modulate an input signal to obtain a modulated signal. The VGA and the PA are configured to adjust a power gain of the modulated signal, and the PA transmits an adjusted modulated signal. The envelope detector tube samples envelope information output by the modulator, to extract corrected information, and then performs correction by using a quadrature modulation compensation (quadrature modulation compensation, QMC for short) algorithm. In this method, that the VGA and the PA adjust the gain of the modulated signal output by the modulator is a dynamic process. In the adjustment process, power of the modulated signal output by the PA may exceed operating power of the envelope detector tube, and consequently the envelope detector tube cannot work normally.

To resolve this problem, the embodiments of this application provide the following technical solution: The signal correction system modulates an input signal to output a modulated signal; the signal correction system amplifies power of the modulated signal to obtain a first modulated signal; then the signal correction system compensates for power of a partial modulated signal of the first modulated signal to obtain a second modulated signal, where power of the second modulated signal meets operating power of a first envelope detector; then the signal correction system collects first envelope information used to indicate information about amplitude phase imbalance and direct current imbalance of the modulated signal and information about spatial leakage of an image signal and a local-frequency signal of the modulated signal; the signal correction system obtains through calculation a quadrature modulation compensation coefficient based on the first envelope information; and finally the signal correction system corrects the modulated signal from the modulator based on the quadrature modulation compensation coefficient.

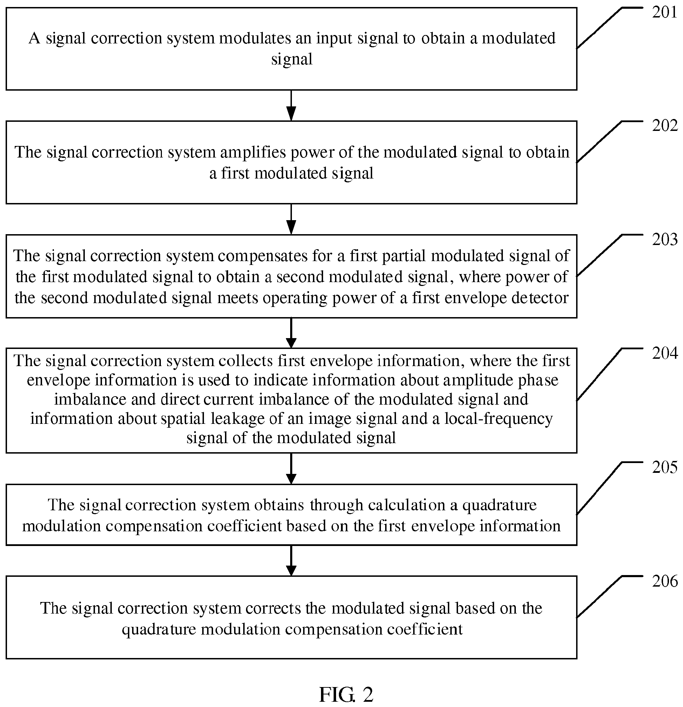

The following describes the signal correction method in the embodiments of this application. For specific details, refer to FIG 2. An embodiment of the signal correction method in the embodiments of this application includes the following steps.

201. A signal correction system modulates an input signal to obtain a modulated signal.

The signal correction system modulates the input signal to obtain the modulated signal.

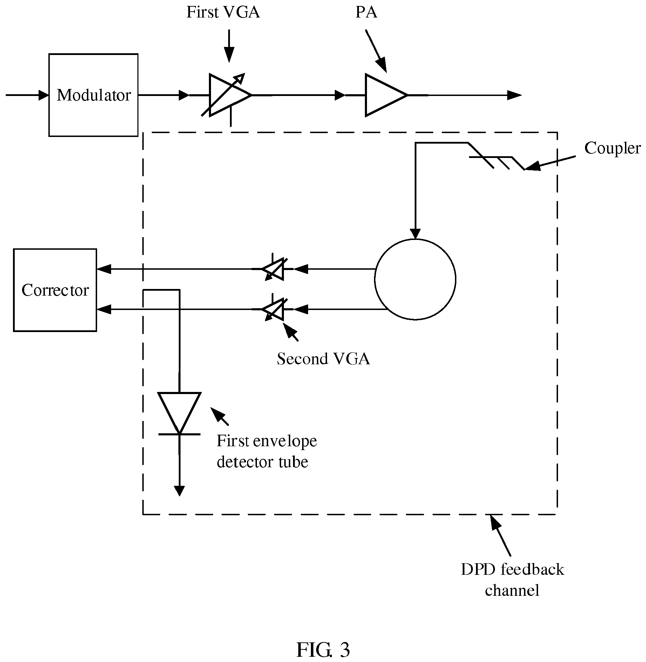

In this embodiment, a signal correction system shown in FIG 3 is used as an example. The signal correction system includes a modulator, a first VGA, a PA, a coupler, a second VGA, and a first envelope detector tube.

The coupler, the second VGA, and the first envelope detector tube are included in a DPD feedback channel.

In this embodiment, the signal correction system modulates the input signal by using the modulator, to generate the modulated signal.

202. The signal correction system amplifies power of the modulated signal to obtain a first modulated signal.

The signal correction system amplifies the power of the modulated signal to obtain the first modulated signal.

In actual application, the signal correction system needs to amplify the power of the modulated signal, and then output and use a modulated signal obtained after power amplification. The signal correction system shown in FIG 3 is used as an example. The signal correction system may amplify the power of the modulated signal by using the first VGA and the PA, to obtain the first modulated signal. The first VGA may be used to determine an amplification amplitude of the modulated signal (for example, a power amplification range of the modulated signal is from 0 decibels to 30 decibels). Then, the PA amplifies final power of the modulated signal and outputs the final amplified power (for example, if maximum power required for output in the system shall be 60 decibels, when the first VGA reaches a gain of 30 decibels, the PA further needs to amplify the power from the 30 decibels to 60 decibels).

In this embodiment, functions implemented by the first VGA and the PA in the signal correction system may also be implemented by another component that can implement variable power adjustment. For example, the first VGA may include a frequency converter and a fixed amplifier, provided that a gain of the modulated signal is variable. A specific component is not limited herein. Similarly, a function of the second VGA may also be implemented by a frequency converter and a fixed amplifier. A specific component is not limited herein.

203. The signal correction system compensates a first partial modulated signal of the first modulated signal to obtain a second modulated signal, where power of the second modulated signal meets operating power of a first envelope detector.

The signal correction system compensates for a gain of the first partial modulated signal of the first modulated signal to obtain the second modulated signal whose power meets the operating power of the first envelope detector.

In this embodiment, the signal correction system divides the first modulated signal into at least two partial modulated signals, and then selects a first partial modulated signal (namely, one of the at least two partial modulated signals) for a signal feedback.

In this embodiment, the operating power of the first envelope detector is within a preset power range, while the power of the second modulated signal only needs to be within the preset power range. For example, an operating range of the envelope detector is from 5 decibels to 10 decibels. In other words, the power of the second modulated signal only needs to be greater than or equal to 5 decibels and less than or equal to 10 decibels.

In this embodiment, the first envelope detector may be an envelope detector tube or a spectrum analyzer, provided that the envelope information can be collected. Details are not limited herein.

In this embodiment, as shown in the signal correction system shown in FIG 3, the coupler performs power allocation on the first modulated signal output by the PA. To be specific, a signal transmitted by the coupler to the second VGA is a signal with power degraded, and then the second VGA compensates, according to a rule of meeting the operating power of the first envelope detector tube, the signal transmitted by the coupler, to obtain the second modulated signal. For example, a gain of the first VGA is 20 decibels, and power obtained after amplification by the PA is 50 decibels. Power of a signal transmitted by the coupler is 5 decibels, while operating power of the first envelope detector tube is 8 decibels. In this case, a gain of the second VGA is 3 decibels. Then, an input signal needed by the first envelope detector is output. In this embodiment, a gain direction of the first VGA is opposite to a gain direction of the second VGA. To be specific, a gain trend of the first VGA is opposite to a gain trend of the second VGA. For example, a gain range of the first VGA is from 0 decibels to 30 decibels, and a power range obtained after amplification by the PA is from 30 decibels to 60 decibels. A power range of a signal transmitted by the coupler is from 3 decibels to 6 decibels, while operating power of the first envelope detector tube is 8 decibels. In this case, a gain range of the second VGA is from 5 decibels to 2 decibels. In other words, the gain trend of the first VGA is a rising trend, while the gain trend of the second VGA is a falling trend.

In this embodiment, the first envelope detector tube shown in FIG 3 may be connected to the signal correction system in a differential form. In this way, when leakage occurs in common-mode space, the first envelope detector tube is not affected.

204. The signal correction system collects first envelope information, where the first envelope information is used to indicate information about amplitude phase imbalance and direct current imbalance of the modulated signal and information about spatial leakage of an image signal and a local-frequency signal of the modulated signal.

The signal correction system collects the first envelope information of the modulated signal, where the first envelope information is used to indicate the information about the amplitude phase imbalance and the direct current imbalance of the modulated signal and the information about the spatial leakage of the image signal and the local-frequency signal of the modulated signal.

In this embodiment, the signal correction system shown in FIG 3 is used as an example. The first envelope detector tube is located behind the second VGA, and the first envelope detector tube starts to work when power of the second modulated signal output by the second VGA is within a preset range (in other words, the power is stable). When the second modulated signal is obtained by adjusting a gain of the modulated signal by the second VGA, if the power of the second modulated signal meets operating power of the first envelope detector tube, the first envelope detector tube can work normally. Because the first envelope detector tube is located at the behind of an entire modulation link, to be specific, behind the PA, the first envelope detector tube can collect the information about the amplitude phase imbalance and direct current imbalance of the modulated signal and the information about the spatial leakage of the image signal and the local-frequency signal of the modulated signal. In this embodiment, after the first envelope detector tube obtains the first envelope information, the signal correction system may save the first envelope information or a quadrature modulation compensation coefficient obtained through calculation based on the first envelope information. Then, the first envelope detector tube is enabled to stop working temporarily and a timer is started. After the timer exceeds preset duration, the signal correction system starts the first envelope detector tube again. Then, the first envelope detector tube obtains the envelope information of the modulated signal again. In a process in which the timer times, the signal correction system may obtain through calculation the quadrature modulation compensation coefficient based on the saved first envelope information, or may directly obtain the saved quadrature modulation compensation coefficient.

In actual application, when the first envelope detector tube works periodically, a specific process of the implementation is as follows.

In this embodiment, a moment at which the first envelope detector tube stops working is used as a start moment. At this moment, the signal correction system starts a timer, and the signal correction system determines whether timing duration of the timer exceeds preset duration. If the timing duration of the timer exceeds the preset duration, the signal correction system freezes use of a current link gain and use of a current quadrature modulation compensation coefficient, and starts the first envelope detector tube. Then, the signal correction system reads current envelope information collected by the first envelope detector tube. Finally, the signal correction coefficient obtains through calculation the current quadrature modulation compensation coefficient based on the current envelope information. If the timing duration of the timer does not exceed the preset duration, the signal correction coefficient directly obtains the envelope information before the first envelope detector tube stops working, or directly obtains the quadrature modulation compensation coefficient obtained through calculation before the first envelope detector tube stops working.

In this embodiment, the signal correction coefficient may use the timer or a timing accumulator, provided that periodic adjustment can be performed. Which specific manner is used is not processed herein.

205. The signal correction system obtains through calculation a quadrature modulation compensation coefficient based on the first envelope information.

After obtaining the first envelope information, the signal correction system obtains the information about the amplitude phase imbalance and the direct current imbalance of the modulated signal and the information about the spatial leakage of the image signal and the local-frequency signal of the modulated signal. Then, the signal correction system obtains, through calculation by using a quadrature modulation compensation algorithm, the quadrature modulation compensation coefficient based on the information about the amplitude phase imbalance and the direct current imbalance of the modulated signal and the information about the spatial leakage of the image signal and the local-frequency signal of the modulated signal.

In this embodiment, the signal correction system first performs digital processing on a signal fed back by a first envelope detector tube, adjusts a delay and an amplitude of the feedback signal, performs matching between an adjusted feedback signal and a reference signal, and performs a comparison to obtain a difference between the feedback signal and the reference signal, to resolve the quadrature modulation compensation coefficient.

206. The signal correction system corrects the modulated signal based on the quadrature modulation compensation coefficient.

The signal correction system corrects the modulated signal based on the quadrature modulation compensation coefficient.

In this embodiment, the signal correction system adjusts an amplitude, a phase, and direct current information of the modulated signal by using the quadrature modulation compensation coefficient, to correct the modulator and amplitude phase imbalance of spatial leakage.

In this embodiment, the signal correction system compensates for a dynamic gain of the first modulated signal based on a power amplification result of the first modulated signal to obtain a second modulated signal, so that power of the second modulated signal meets operating power of the first envelope detector. This ensures that the first envelope detector can work continuously normally, thereby implementing quadrature modulation compensation on the modulated signal.

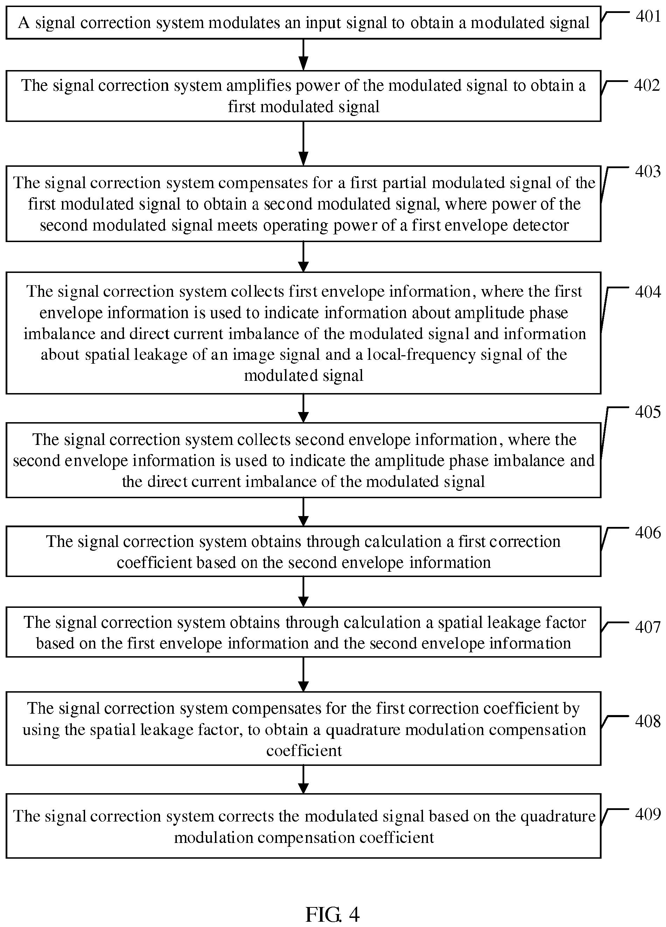

For specific details, refer to FIG 4. Another embodiment of a signal correction method in the embodiments of this application includes the following steps.

401. A signal correction system modulates an input signal to obtain a modulated signal.

The signal correction system modulates the input signal to obtain the modulated signal.

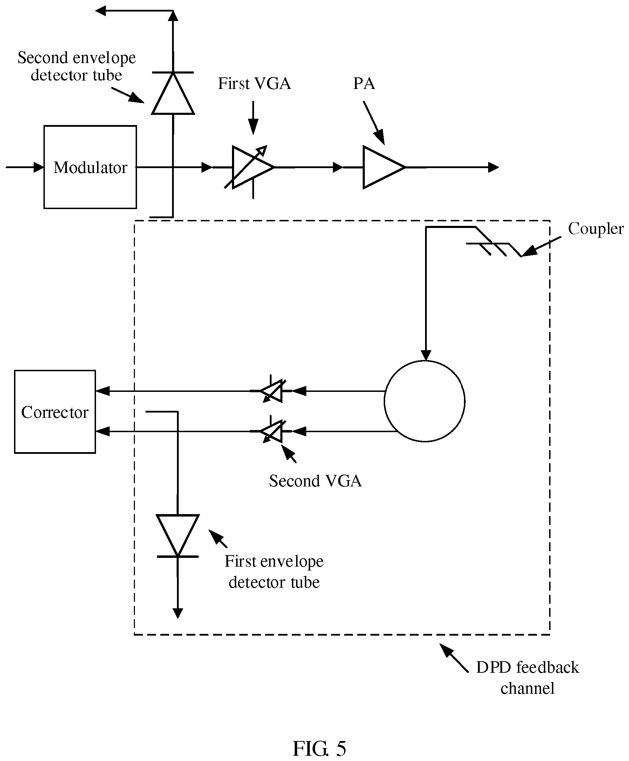

In this embodiment, a signal correction system shown in FIG 5 is used as an example. The signal correction system includes a modulator, a first VGA, a PA, a coupler, a second VGA, a first envelope detector tube, and a second envelope detector tube.

The coupler, the second VGA, and the first envelope detector tube are included in a DPD feedback channel.

In this embodiment, the signal correction system modulates the input signal by using the modulator, to generate the modulated signal.

402. The signal correction system amplifies power of the modulated signal to obtain a first modulated signal.

The signal correction system amplifies the power of the modulated signal to obtain the first modulated signal.

In actual application, the signal correction system needs to amplify the power of the modulated signal, and then output and use a modulated signal obtained after power amplification. The signal correction system shown in FIG 5 is used as an example. The signal correction system may amplify the power of the modulated signal by using the first VGA and the PA, to obtain the first modulated signal. The first VGA may be used to determine an amplification amplitude of the modulated signal (for example, a power amplification range of the modulated signal is from 0 decibels to 30 decibels). Then, the PA amplifies final power of the modulated signal and outputs the final amplified power (for example, if maximum power required for output in the system shall be 60 decibels, when the first VGA reaches a gain of 30 decibels, the PA further needs to amplify the power from the 30 decibels to 60 decibels).

In this embodiment, functions implemented by the first VGA and the PA in the signal correction system may also be implemented by another component that can implement variable power adjustment. For example, the first VGA may include an inverter and a fixed amplifier, provided that a gain of the modulated signal is variable. A specific component is not limited herein. Similarly, a function of a second VGA may also be implemented by a converter and a fixed amplifier. A specific component is not limited herein.

403. The signal correction system compensates a first partial modulated signal of the first modulated signal to obtain a second modulated signal, where power of the second modulated signal meets operating power of a first envelope detector.

The signal correction system compensates for a gain of the first partial modulated signal of the first modulated signal to obtain the second modulated signal whose power meets the operating power of the first envelope detector.

In this embodiment, the signal correction system divides the first modulated signal into at least two partial modulated signals, and then selects a first partial modulated signal (namely, one of the at least two partial modulated signals) for a signal feedback.

In this embodiment, the operating power of the first envelope detector is within a preset power range, while the power of the second modulated signal only needs to be within the preset power range. For example, an operating range of the envelope detector is from 5 decibels to 10 decibels. In other words, the power of the second modulated signal only needs to be greater than or equal to 5 decibels and less than or equal to 10 decibels.

In this embodiment, as shown in the signal correction system shown in FIG 5, the coupler performs power allocation on the first modulated signal output by the PA. To be specific, a signal transmitted by the coupler to the second VGA is a signal with power degraded, and then the second VGA compensates, according to a rule of meeting the operating power of the first envelope detector tube, the signal transmitted by the coupler, to obtain the second modulated signal. For example, a gain of the first VGA is 20 decibels, and power obtained after amplification by the PA is 50 decibels. Power of a signal transmitted by the coupler is 5 decibels, while operating power of the first envelope detector tube is 8 decibels. In this case, a gain of the second VGA is 3 decibels. Then, an input signal needed by the first envelope detector is output. In this embodiment, a gain direction of the first VGA is opposite to a gain direction of the second VGA. To be specific, a gain trend of the first VGA is opposite to a gain trend of the second VGA. For example, a gain range of the first VGA is from 0 decibels to 30 decibels, and a power range obtained after amplification by the PA is from 30 decibels to 60 decibels. A power range of a signal transmitted by the coupler is from 3 decibels to 6 decibels, while operating power of the first envelope detector tube is 8 decibels. In this case, a gain range of the second VGA is from 5 decibels to 2 decibels. In other words, the gain trend of the first VGA is a rising trend, while the gain trend of the second VGA is a falling trend.

In this embodiment, the first envelope detector tube shown in FIG 5 may be connected to the signal correction system in a differential form. In this way, when leakage occurs in common-mode space, the first envelope detector tube is not affected.

404. The signal correction system collects first envelope information, where the first envelope information is used to indicate information about amplitude phase imbalance and direct current imbalance of the modulated signal and information about spatial leakage of an image signal and a local-frequency signal of the modulated signal.

The signal correction system collects the first envelope information of the modulated signal, where the first envelope information is used to indicate the information about the amplitude phase imbalance and the direct current imbalance of the modulated signal and the information about the spatial leakage of the image signal and the local-frequency signal of the modulated signal.

In this embodiment, the signal correction system shown in FIG 5 is used as an example. The first envelope detector tube is located behind the second VGA, and the first envelope detector tube starts to work when power of the second modulated signal output by the second VGA is within a preset range (in other words, the power is stable). When the second modulated signal is obtained by adjusting a gain of the modulated signal by the second VGA, if the power of the second modulated signal meets operating power of the first envelope detector tube, the first envelope detector tube can work normally. Because the first envelope detector tube is located at the behind of an entire modulation link, to be specific, behind the PA, the first envelope detector tube can collect the information about the amplitude phase imbalance and direct current imbalance of the modulated signal and the information about the spatial leakage of the image signal and the local-frequency signal of the modulated signal. In this embodiment, after the first envelope detector tube obtains the first envelope information, the signal correction system may save the first envelope information or a quadrature modulation compensation coefficient obtained through calculation based on the first envelope information. Then, the first envelope detector tube is enabled to stop working temporarily and a timer is started. After the timer exceeds preset duration, the signal correction system starts the first envelope detector tube again. Then, the first envelope detector tube obtains the envelope information of the modulated signal again. The second envelope detector tube in this embodiment work continuously.

405. The signal correction system collects second envelope information, where the second envelope information is used to indicate the amplitude phase imbalance and the direct current imbalance of the modulated signal.

The signal correction system collects the second envelope information of the modulated signal, where the second envelope information is used to indicate the amplitude phase imbalance and the direct current imbalance of the modulated signal.

In this embodiment, the signal correction system shown in FIG 5 is used as an example. The second envelope detector tube is located between the modulator and the first VGA. The second envelope information collected by the second envelope detector tube includes only the amplitude phase imbalance and the direct current imbalance of the modulated signal.

406. The signal correction system obtains through a calculation first correction coefficient of the modulated signal based on the second envelope information.

The signal correction system obtains through calculation, by using a quadrature modulation compensation algorithm, a first correction coefficient of the modulated signal based on the second envelope information.

In this embodiment, there is no sequence between steps 403 and 404 and step 402. To be specific, there is no sequence in collecting the first envelope information and the second envelope information by the signal correction system.

407. The signal correction system obtains through calculation a spatial leakage factor based on the first envelope information and the second envelope information.

The signal correction system obtains through calculation the spatial leakage factor of an image signal and a local-frequency signal of the modulated signal based on the first envelope information and the second envelope information.

In this embodiment, the signal correction system may calculate the spatial leakage factor of the modulated signal according to a formula. The formula is specific as follows.

A distortion model in the first envelope detector tube is:

$$y(k)/G = x(k) + \beta \times x^*(k) + c + \alpha \times x^*(k)/G + d/G;$$

a distortion model (to be specific, the first correction coefficient) in the second envelope detector tube is:

$$y(k)'/G = x(k) + \beta \times x^*(k) + c;$$

and

a spatial leakage factor obtained by subtracting the distortion model in the second envelope detector tube from the distortion model in the first envelope detector tube is $\alpha \times x^*(k)/G + d/G$.

x(k) is an original signal, x*(k) represents a distortion of amplitude phase imbalance, $\beta$ represents a distortion coefficient of amplitude phase imbalance of the modulator, c represents direct current imbalance of the modulator, $\alpha$ represents a distortion coefficient of amplitude phase imbalance of the spatial leakage, d represents direct current imbalance of the spatial leakage, and G represents a gain of an intermediate amplifier.

In actual application, when the first envelope detector tube works periodically, a specific process of the implementation is as follows.

In this embodiment, a moment at which the first envelope detector tube stops working is used as a start moment. At this moment, the signal correction system starts a timer, and the signal correction system determines whether timing duration of the timer exceeds preset duration. If the timing duration of the timer exceeds the preset duration, the signal correction system freezes use of a current link gain and use of a current quadrature modulation compensation coefficient, and starts the first envelope detector tube. Then, the signal correction system reads current envelope information collected by the first envelope detector tube and current envelope information collected by the second envelope detector tube. Finally, the signal correction coefficient obtains through calculation a current spatial leakage factor based on the current envelope information collected by first envelope detector tube and the current envelope information collected by the second envelope detector tube. If the timing duration of the timer does not exceed the preset duration, the signal correction coefficient directly obtains the envelope information before the first envelope detector tube stops working, or directly obtains the spatial leakage factor obtained through calculation before the first envelope detector tube stops working.

In this embodiment, the signal correction coefficient may use the timer or a timing accumulator, provided that periodic adjustment can be performed. Which specific manner is used is not processed herein.

408. The signal correction system compensates for, by using the spatial leakage factor, the first correction coefficient to obtain the quadrature modulation compensation coefficient.

The signal correction system compensates for, by using the spatial leakage factor, the first correction coefficient to obtain the quadrature modulation compensation coefficient.

409. The signal correction coefficient corrects the modulated signal based on the quadrature modulation coefficient.

The signal correction system corrects the modulated signal based on the quadrature modulation compensation coefficient.

In this embodiment, the signal correction system adjusts an amplitude, a phase, and direct current information of the modulated signal by using the quadrature modulation compensation coefficient, to correct the modulator and amplitude phase imbalance of spatial leakage. In this embodiment, the signal correction system compensates for a dynamic gain of the first modulated signal based on a power amplification result of the first modulated signal to obtain a second modulated signal, so that power of the second modulated signal meets operating power of the first envelope detector tube. This ensures that the first envelope detector tube can work continuously normally, thereby implementing quadrature modulation compensation on the modulated signal. In addition, after collecting second envelope information for indicating amplitude phase imbalance and direct current imbalance of the modulated signal, the signal correction system calculates the quadrature modulation compensation coefficient with reference to the second envelope information and the first envelope information. In this way, calculation steps can be reduced in a calculation process, thereby increasing a correction speed. The foregoing describes the signal correction method in the embodiments of this application. The following describes a signal correction system in the embodiments of this application.

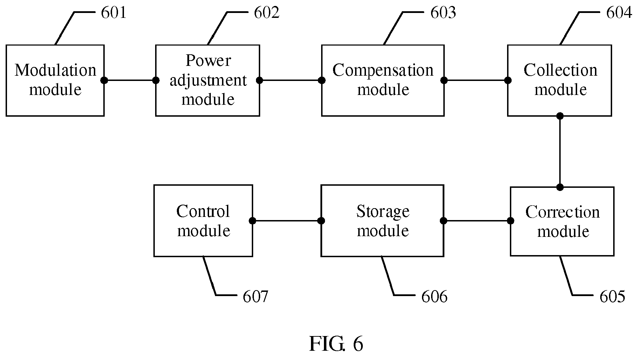

For specific details, refer to FIG 6. An embodiment of a signal correction system in embodiments of this application includes:

a modulation module 601, configured to modulate an input signal to output a modulated signal;
a power adjustment module 602, configured to amplify power of the modulated signal to obtain a first modulated signal;
a compensation module 603, configured to compensate for power of a first partial modulated signal of the first modulated signal to obtain a second modulated signal, where power of the second modulated signal meets operating power of a first envelope detector, and the first partial modulated signal is one of at least two partial modulated signals obtained by dividing the first modulated signal;
a collection module 604, configured to obtain and collect first envelope information, where the first envelope information is used to indicate amplitude phase imbalance and direct current imbalance of the modulated signal and spatial leakage of an image signal and a local-frequency signal of the modulated signal; and
a correction module 605, configured to obtain through calculation a quadrature modulation compensation coefficient based on the first envelope information, and correct the modulated signal by using the quadrature modulation compensation coefficient.

Optionally, the collection module 604 is further configured to collect second envelope information. The second envelope information is used to indicate the amplitude phase imbalance and the direct current imbalance of the modulated signal.

The correction module 605 is further configured to: obtain through calculation a first correction coefficient of the second envelope detector based on the second envelope information, obtain through calculation a spatial leakage factor based on the first envelope information and the second envelope information, and compensate for the first correction coefficient by using the spatial leakage factor, to obtain the quadrature modulation compensation coefficient.

Optionally, the signal correction system further includes:

a storage module 606, configured to save the spatial leakage factor; and
a control module 607, configured to: turn off the first envelope detector and start a timer; and if the timer exceeds preset duration, start the first envelope detector.

Optionally, the control module 607 is specifically configured to: determine whether a power range of a modulated signal from the modulator is with a preset range, and if yes, start the first envelope detector.

Optionally, the first envelope detector works in a differential form.

In this embodiment, the compensation module 603 compensates for a dynamic gain of the first modulated signal based on a power amplification result of the first modulated signal to obtain a second modulated signal, so that power of the second modulated signal meets operating power of the first envelope detector. This ensures that the first envelope detector can work continuously normally, to be specific, to collect first envelope information, thereby implementing quadrature modulation compensation on the modulated signal. In addition, after collecting second envelope information for indicating amplitude phase imbalance and direct current imbalance of the modulated signal, the signal correction system calculates the quadrature modulation compensation coefficient with reference to the second envelope information and the first envelope information. In this way, calculation steps can be reduced in a calculation process, thereby increasing a correction speed.

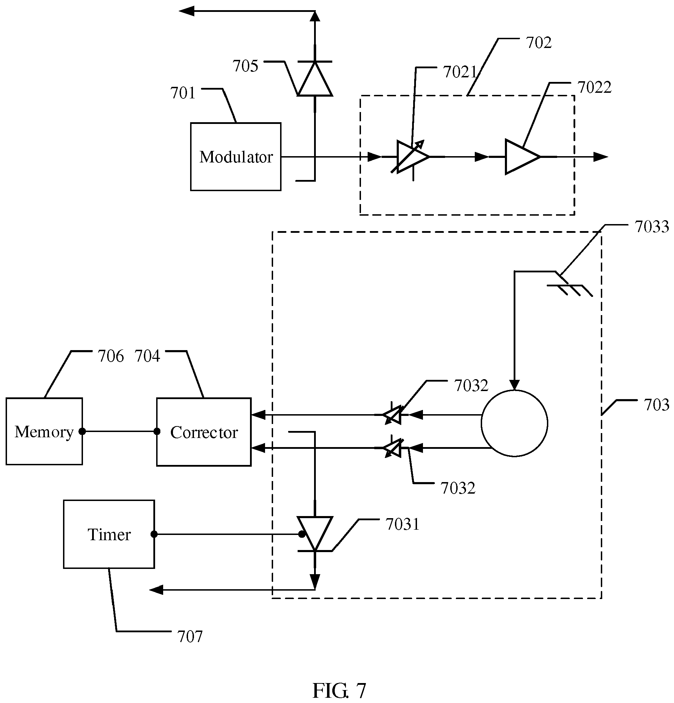

For specific details, refer to FIG 7. Another embodiment of a signal correction system in embodiments of this application includes:

a modulator 701, a first variable gain regulator 702, a digital predistortion DPD feedback channel 703, and a corrector 704.

The DPD feedback channel 703 includes: a first envelope detector 7031, a second variable gain regulator 7032, and a power splitter 7033.

The modulator 701 is configured to modulate an input signal to output a modulated signal.

The first variable gain regulator 702 is configured to amplify power of the modulated signal to obtain a first modulated signal, and output the first modulated signal to the second variable gain regulator 7032.

The power splitter 7033 is configured to divide the first modulated signal into at least two partial modulated signals, and send a first partial modulated signal to the second variable gain regulator.

The second variable gain regulator 7032 is configured to compensate for power of the first partial modulated signal to obtain a second modulated signal, where power of the second modulated signal meets operating power of the first envelope detector.

The first envelope detector 7031 is configured to collect first envelope information, where the first envelope information is used to indicate information about amplitude phase imbalance and direct current imbalance of the modulated signal and information about spatial leakage of an image signal and a local-frequency signal of the modulated signal.

The corrector 704 is configured to obtain through calculation a quadrature modulation compensation coefficient based on the information about the amplitude phase imbalance and the direct current imbalance of the modulated signal and the information about the spatial leakage, and correct the modulated signal from the modulator by using the quadrature modulation compensation coefficient.

Optionally, the signal correction system further includes:

a second envelope detector 705.

The second envelope detector 705 is connected to the modulator 701, and the second envelope detector is connected to the first variable gain regulator 702; and

The second envelope detector 705 is configured to collect second envelope information. The second envelope information is used to indicate the amplitude phase imbalance and the direct current imbalance of the modulated signal; and

The corrector 704 is specifically configured to: obtain through calculation a first correction coefficient of the second envelope detector based on the second envelope information; obtain through calculation a spatial leakage factor based on the first envelope information and the second envelope information; and compensate for the first correction coefficient by using the spatial leakage factor, to obtain the quadrature modulation compensation coefficient. Optionally, the signal correction system further includes a memory 706 and a timer 707.

The memory 706 is configured to store the spatial leakage factor.

The timer 707 is configured to: start timing after the first envelope detector 7031 stops running; and when the timer exceeds preset duration, the first envelope detector 7031 starts to run.

Optionally, the first envelope detector 7031 works in a differential form.

Optionally, the first variable gain regulator 702 includes a first VGA 7021 and a PA 7022.

In this embodiment, the second variable gain regulator 7032 compensates for a dynamic gain of the first modulated signal based on a power amplification result of the first modulated signal to obtain a second modulated signal, so that power of the second modulated signal meets operating power of the first envelope detector 7031. This ensures that the first envelope detector 7031 can work continuously normally, to be specific, to collect first envelope information, thereby implementing quadrature modulation compensation on the modulated signal. In addition, the second envelope detector 705 collects second envelope information between the modulator 701 and the first variable gain regulator, and calculates the quadrature modulation compensation coefficient with reference to the second envelope information and the first envelope information. In this way, calculation steps in a calculation process can be reduced, thereby increasing a correction speed.

It may be clearly understood by persons skilled in the art that, for the purpose of convenient and brief description, for a detailed working process of the foregoing system, apparatus, and unit, refer to a corresponding process in the foregoing method embodiments, and details are not described again.

In the several embodiments provided in this application, it should be understood that the disclosed system, apparatus, and method may be implemented in other manners. For example, the described apparatus embodiments are merely examples. For example, the unit division is merely logical function division, and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. A signal correction system, comprising:

   a modulator (701), a first variable gain regulator (702), a digital predistortion DPD feedback channel (703), and a corrector (704), wherein
   the DPD feedback channel comprises a first envelope detector (7031), a second variable gain regulator (7032), and a power splitter (7033);
   the modulator is configured to modulate an input signal to output a modulated signal;
   the first variable gain regulator is configured to amplify power of the modulated signal to obtain a first modulated signal, and output the first modulated signal to the second variable gain regulator;
   the power splitter is configured to divide the first modulated signal into at least two partial modulated signals, and send a first partial modulated signal to the second variable gain regulator;
   the second variable gain regulator is configured to compensate for power of the first partial modulated signal to obtain a second modulated signal, and send the second modulated signal to the first envelope detector, wherein power of the second modulated signal meets operating power of the first envelope detector;
   the first envelope detector is configured to collect first envelope information, wherein the first envelope information is used to indicate information about amplitude phase imbalance and direct current imbalance of the modulated signal and information about spatial leakage of an image signal and a local-frequency signal of the modulated signal; and
   the corrector is configured to correct the modulated signal from the modulator by using a quadrature modulation compensation coefficient,
   wherein the signal correction system further comprises:

      a second envelope detector, wherein
      the second envelope detector is connected to the modulator, and the second envelope detector is connected to the first variable gain regulator; and
      the second envelope detector is configured to collect second envelope information, wherein the second envelope information is used to indicate the amplitude phase imbalance and the direct current imbalance of the modulated signal; and

the corrector is specifically configured to: obtain through calculation a first correction coefficient of the second envelope detector based on the second envelope information, obtain through calculation a spatial leakage factor based on the first envelope information and the second envelope information, and compensate for the first correction coefficient by using the spatial leakage factor, to obtain the quadrature modulation compensation coefficient.

2. The signal correction system according to claim 1, wherein the signal correction system further comprises a memory (706) and a timer (707); and

the memory is connected to the corrector, and the timer is connected to the first envelope detector;
the memory is configured to store the spatial leakage factor; and
the timer is configured to: start timing after the first envelope detector stops running; and when the timer exceeds preset duration, the first envelope detector starts to run.

3. The signal correction system according to any one of claims 1 and 2, wherein the first envelope detector is connected to the signal correction system in a differential form.

4. The signal correction system according to any one of claims 1 and 2, wherein the first variable gain regulator comprises a first variable gain amplifier VGA (7021) and a power amplifier, PA, (7022).

5. A signal correction method, comprising:

modulating, by a modulator (701), an input signal to output a modulated signal;
amplifying, by a first variable gain regulator (702), power of the modulated signal to obtain a first modulated signal, compensating for, by a second variable gain regulator (7032), power of a first partial modulated signal of the first modulated signal to obtain a second modulated signal, wherein power of the second modulated signal meets operating power of a first envelope detector, and the first partial modulated signal is one of at least two partial modulated signals obtained by dividing, by a splitter (7033), the first modulated signal;
collecting, by the first envelope detector (7031), first envelope information, wherein the first envelope information is used to indicate information about amplitude phase imbalance and direct current imbalance of the modulated signal and information about spatial leakage of an image signal and a local-frequency signal of the modulated signal;
correcting, by a corrector (704), the modulated signal by using a quadrature modulation compensation coefficient, wherein before the correcting, the modulated signal by using the modulation compensation coefficient, the method further comprises:

collecting, by the corrector (704), second envelope information, wherein the second envelope information is collected by a second envelope detector (705) connected to the modulator and to the first variable gain regulator, and is used to indicate the amplitude phase imbalance and the direct current imbalance of the modulated signal;
obtaining, by the corrector (704) through calculation, a first correction coefficient based on the second envelope information;
obtaining, by the corrector (704) through calculation, a spatial leakage factor based on the first envelope information and the second envelope information; and
compensating for, by the corrector (704) by using the spatial leakage factor, the first correction coefficient to obtain the quadrature modulation compensation coefficient.

6. The method according to claim 5, wherein after the obtaining of the spatial leakage factor based on the first envelope information and the second envelope information, the method further comprises:

saving, by a memory (706) the spatial leakage factor, and turning off the first envelope detector and starting a timer (707); and
if the timer exceeds preset duration, starting the first envelope detector.

7. The method according to claim 6, wherein before the starting the first envelope detector, the method further comprises:

if a power range of the first modulated signal meets a preset range, starting the first envelope detector

8. The method according to any one of claims 5 to 7, wherein the first envelope detector works in a differential form.

**Patentansprüche**

1. Signalkorrektursystem, umfassend:

   einen Modulator (701), einen ersten variablen Gewinnregler (702),
   einen digitalen Vorverzerrungs(digital predistortion - DPD)-Rückkopplungskanal (703), und
   einen Korrektor (704), wobei
   der DPD-Rückkopplungskanal einen ersten Hüllkurvendetektor (7031), einen zweiten variablen Gewinnregler (7032) und einen Leistungsverteiler (7033) umfasst;
   der Modulator konfiguriert ist, um ein Eingangssignal zu modulieren, um ein moduliertes Signal auszugeben;
   der erste variable Gewinnregler konfiguriert ist, um die Leistung des modulierten Signals zu verstärken, um ein erstes moduliertes Signal zu erhalten, und das erste modulierte Signal an den zweiten variablen Gewinnregler auszugeben;
   der Leistungsverteiler konfiguriert ist, um das erste modulierte Signal in mindestens zwei modulierte Teilsignale zu teilen und ein erstes moduliertes Teilsignal an den zweiten variablen Gewinnregler zu senden;
   der zweite variable Gewinnregler konfiguriert ist, um für Leistung des ersten modulierten Teilsignals zu kompensieren, um ein zweites moduliertes Signal zu erhalten, und das zweite modulierte Signal an den ersten Hüllkurvendetektor zu senden, wobei die Leistung des zweiten modulierten Signals der Betriebsleistung des ersten Hüllkurvendetektors entspricht;
   der erste Hüllkurvendetektor konfiguriert ist, um erste Hüllkurveninformationen zu sammeln, wobei die ersten Hüllkurveninformationen verwendet werden, um Informationen über eine Amplitudenphasenunausgeglichenheit und eine Gleichstromunausgeglichenheit des modulierten Signals und Informationen über einen räumlichen Streuverlust eines Bildsignals und eines Lokalfrequenzsignals des modulierten Signals anzugeben; und
   der Korrektor konfiguriert ist, um das modulierte Signal von dem Modulator mittels Verwendens eines Quadraturmodulationskompensationskoeffizienten zu korrigieren, wobei das Signalkorrektursystem ferner umfasst:

   einen zweiten Hüllkurvendetektor, wobei
   der zweite Hüllkurvendetektor mit dem Modulator verbunden ist und der zweite Hüllkurvendetektor mit dem ersten variablen Gewinnregler verbunden ist; und
   der zweite Hüllkurvendetektor konfiguriert ist, um zweite Hüllkurveninformationen zu sammeln, wobei die zweiten Hüllkurveninformationen verwendet werden, um die Amplitudenphasenunausgeglichenheit und die Gleichstromunausgeglichenheit des modulierten Signals anzugeben; und
   der Korrektor speziell konfiguriert ist zum: Erhalten, durch Berechnung, eines ersten Korrekturkoeffizienten des zweiten Hüllkurvendetektors basierend auf den zweiten Hüllkurveninformationen, Erhalten, durch Berechnung, eines räumlichen Streuverlustfaktors basierend auf den ersten Hüllkurveninformationen und den zweiten Hüllkurveninformationen, und Kompensieren des ersten Korrekturkoeffizienten mittels Verwendens des räumlichen Streuverlustfaktors, um den Quadraturmodulationskompensationskoeffizienten zu erhalten.

2. Signalkorrektursystem nach Anspruch 1, wobei das Signalkorrektursystem ferner einen Speicher (706) und einen Zeitgeber (707) umfasst; und

   der Speicher mit dem Korrektor verbunden ist, und der Zeitgeber mit dem ersten Hüllkurvendetektor verbunden ist;
   der Speicher konfiguriert ist, um den räumlichen Streuverlustfaktor zu speichern; und der Zeitgeber konfiguriert ist zum: Starten einer Zeiteinstellung, nachdem der erste Hüllkurvendetektor aufhört zu laufen; und wenn der Zeitgeber die voreingestellte Dauer überschreitet, der erste Hüllkurvendetektor zu laufen startet.

3. Signalkorrektursystem nach einem der Ansprüche 1 und 2, wobei der erste Hüllkurvendetektor mit dem Signalkorrektursystem in einer differentiellen Form verbunden ist.

4. Signalkorrektursystem nach einem der Ansprüche 1 und 2, wobei der erste variable Gewinnregler einen ersten variablen Gewinnverstärker (variable gain amplifier- VGA) (7021) und einen Leistungsverstärker (power amplifier - PA) (7022) umfasst.

5. Signalkorrekturverfahren, umfassend:

Modulieren, mittels eines Modulators (701), eines Eingangssignals, um ein moduliertes Signal auszugeben; Verstärken, mittels eines ersten variablen Gewinnreglers (702), der Leistung des modulierten Signals, um ein erstes moduliertes Signal zu erhalten, Kompensieren, mittels eines zweiten variablen Gewinnreglers (7032), der Leistung eines ersten modulierten Teilsignals des ersten modulierten Signals, um ein zweites moduliertes Signal zu erhalten, wobei die Leistung des zweiten modulierten Signals der Betriebsleistung eines ersten Hüllkurvendetektors entspricht, und das erste modulierte Teilsignal eines von mindestens zwei modulierten Teilsignalen ist, die mittels Teilens des ersten modulierten Signals, mittels eines Verteilers (7033), erhalten werden; Sammeln, mittels des ersten Hüllkurvendetektors (7031), von ersten Hüllkurveninformationen, wobei die ersten Hüllkurveninformationen verwendet werden, um Informationen über eine Amplitudenphasenunausgeglichenheit und eine Gleichstromunausgeglichenheit des modulierten Signals und Informationen über einen räumlichen Streuverlust eines Bildsignals und eines Lokalfrequenzsignals des modulierten Signals anzugeben; Korrigieren, mittels eines Korrektors (704), des modulierten Signals mittels Verwendens eines Quadraturmodulationskompensationskoeffizienten, wobei vor dem Korrigieren des modulierten Signals mittels Verwendens des Modulationskompensationskoeffizienten, das Verfahren ferner umfasst:

Sammeln, mittels des Korrektors (704), von zweiten Hüllkurveninformationen, wobei die zweiten Hüllkurveninformationen mittels eines zweiten Hüllkurvendetektors (705) gesammelt werden, der mit dem Modulator und mit dem ersten variablen Gewinnregler verbunden ist, und verwendet werden, um die Amplitudenphasenunausgeglichenheit und die Gleichstromunausgeglichenheit des modulierten Signals anzugeben;
Erhalten, mittels des Korrektors (704) durch Berechnung, eines ersten Korrekturkoeffizienten basierend auf den zweiten Hüllkurveninformationen;
Erhalten, mittels des Korrektors (704) durch Berechnung, eines räumlichen Streuverlustfaktors basierend auf den ersten Hüllkurveninformationen und den zweiten Hüllkurveninformationen; und
Kompensieren, mittels des Korrektors (704), mittels Verwendens des räumlichen Streuverlustfaktors, des ersten Korrekturkoeffizienten, um den Quadraturmodulationskompensationskoeffizienten zu erhalten.

6. Verfahren nach Anspruch 5, wobei nach dem Erhalten des räumlichen Streuverlustfaktors basierend auf den ersten Hüllkurveninformationen und den zweiten Hüllkurveninformationen, das Verfahren ferner umfasst:

Speichern, mittels eines Speichers (706), des räumlichen Streuverlustfaktors, und
Ausschalten des ersten Hüllkurvendetektors und Starten eines Zeitgebers (707); und
falls der Zeitgeber die voreingestellte Dauer überschreitet, Starten des ersten Hüllkurvendetektors.

7. Verfahren nach Anspruch 6, wobei, vor dem Starten des ersten Hüllkurvendetektors, das Verfahren ferner umfasst: falls ein Leistungsbereich des ersten modulierten Signals einem voreingestellten Bereich entspricht, Starten des ersten Hüllkurvendetektors.

8. Verfahren nach einem der Ansprüche 5 bis 7, wobei der erste Hüllkurvendetektor in einer differentiellen Form arbeitet.

**Revendications**

1. Système de correction de signal, comprenant :

un modulateur (701), un premier régulateur à gain variable (702),
un canal de rétroaction à pré-distorsion numérique, DPD (703), et
un correcteur (704), dans lequel
le canal de rétroaction DPD comprend un premier détecteur d'enveloppe (7031), un second régulateur à gain variable (7032) et un coupleur (7033) ;
le modulateur est configuré pour moduler un signal d'entrée pour émettre un signal modulé ;
le premier régulateur à gain variable est configuré pour amplifier la puissance du signal modulé pour obtenir un premier signal modulé, et émettre le premier signal modulé vers le second régulateur à gain variable ;
le coupleur est configuré pour diviser le premier signal modulé en au moins deux signaux modulés partiels, et

EP 3 605 865 B1

envoyer un premier signal modulé partiel au second régulateur à gain variable ;
le second régulateur à gain variable est configuré pour compenser la puissance du premier signal modulé partiel pour obtenir un second signal modulé, et envoyer le second signal modulé au premier détecteur d'enveloppe, la puissance du second signal modulé rencontrant la puissance de fonctionnement du premier détecteur d'enveloppe ;
le premier détecteur d'enveloppe est configuré pour collecter des premières informations d'enveloppe, les premières informations d'enveloppe étant utilisées pour indiquer des informations sur le déséquilibre de phase d'amplitude et le déséquilibre de courant continu du signal modulé et des informations sur la fuite spatiale d'un signal d'image et un signal de fréquence locale du signal modulé ; et
le correcteur est configuré pour corriger le signal modulé provenant du modulateur en utilisant un coefficient de compensation de modulation en quadrature,
dans lequel le système de correction de signal comprend en outre :

un second détecteur d'enveloppe, dans lequel
le second détecteur d'enveloppe est connecté au modulateur, et le second détecteur d'enveloppe est connecté au premier régulateur à gain variable ; et
le second détecteur d'enveloppe est configuré pour collecter des secondes informations d'enveloppe, les secondes informations d'enveloppe étant utilisées pour indiquer le déséquilibre de phase d'amplitude et le déséquilibre de courant continu du signal modulé ; et
le correcteur est spécifiquement configuré pour : obtenir à travers un calcul un premier coefficient de correction du second détecteur d'enveloppe sur la base des secondes informations d'enveloppe, obtenir à travers un calcul un facteur de fuite spatiale basé sur les premières informations d'enveloppe et les secondes informations d'enveloppe, et compenser le premier coefficient de correction en utilisant le facteur de fuite spatiale, pour obtenir le coefficient de compensation de modulation en quadrature.

2. Système de correction de signal selon la revendication 1, dans lequel le système de correction de signal comprend en outre une mémoire (706) et un temporisateur (707) ; et

la mémoire est connectée au correcteur, et le temporisateur est connecté au premier détecteur d'enveloppe ;
la mémoire est configurée pour stocker le facteur de fuite spatiale ; et
le temporisateur est configuré pour : démarrer la synchronisation après l'arrêt du premier détecteur d'enveloppe ; et lorsque le temporisateur dépasse la durée prédéfinie, le premier détecteur d'enveloppe commence à fonctionner.

3. Système de correction de signal selon l'une quelconque des revendications 1 et 2, dans lequel le premier détecteur d'enveloppe est connecté au système de correction de signal sous une forme différentielle.

4. Système de correction de signal selon l'une quelconque des revendications 1 et 2, dans lequel le premier régulateur à gain variable comprend un premier amplificateur à gain variable, VGA (7021) et un amplificateur de puissance, PA, (7022).

5. Procédé de correction de signal, comprenant :

la modulation, par un modulateur (701), d'un signal d'entrée pour émettre un signal modulé ;
l'amplification, par un premier régulateur à gain variable (702), de la puissance du signal modulé pour obtenir un premier signal modulé, en compensant, par un second régulateur à gain variable (7032),
la puissance d'un premier signal modulé partiel du premier signal modulé pour obtenir un second signal modulé, la puissance du second signal modulé rencontrant la puissance de fonctionnement d'un premier détecteur d'enveloppe, et le premier signal modulé partiel étant l'un d'au moins deux signaux modulés partiels obtenu en divisant, par un coupleur (7033), le premier signal modulé ;
la collecte, par le premier détecteur d'enveloppe (7031), des premières informations d'enveloppe, les premières informations d'enveloppe étant utilisées pour indiquer des informations sur le déséquilibre de phase d'amplitude et le déséquilibre de courant continu du signal modulé et des informations sur la fuite spatiale d'un signal d'image et un signal de fréquence du signal modulé ;
la correction, par un correcteur (704), du signal modulé en utilisant un coefficient de compensation de modulation en quadrature, le procédé comprenant en outre, avant la correction, le signal modulé en utilisant le coefficient de compensation de modulation :

14

la collecte, par un correcteur (704), des secondes informations d'enveloppe, les secondes informations d'enveloppe étant collectées par un second détecteur d'enveloppe (705) connecté au modulateur et au premier régulateur à gain variable, et étant utilisées pour indiquer le déséquilibre de phase d'amplitude et le déséquilibre en courant continu du signal modulé ;

l'obtention, par le correcteur (704) à travers un calcul, d'un premier coefficient de correction sur la base des secondes informations d'enveloppe ;

l'obtention, par le correcteur (704) à travers un calcul, d'un facteur de fuite spatiale sur la base des premières informations d'enveloppe et des secondes informations d'enveloppe ; et

la compensation, par le correcteur (704) en utilisant le facteur de fuite spatiale, du premier coefficient de correction pour obtenir le coefficient de compensation de modulation en quadrature.

6. Procédé selon la revendication 5, dans lequel après l'obtention du facteur de fuite spatiale sur la base des premières informations d'enveloppe et des secondes informations d'enveloppe, le procédé comprend en outre :

la sauvegarde, par une mémoire (706) du facteur de fuite spatiale, et la désactivation du premier détecteur d'enveloppe et le démarrage d'un temporisateur (707) ; et

si le temporisateur dépasse la durée prédéfinie, le démarrage du premier détecteur d'enveloppe.

7. Procédé selon la revendication 6, dans lequel avant le démarrage du premier détecteur d'enveloppe, ledit procédé comprend en outre :

si une plage de puissance du premier signal modulé rencontre une plage prédéfinie, le démarrage du premier détecteur d'enveloppe.

8. Procédé selon l'une quelconque des revendications 5 à 7, dans lequel le premier détecteur d'enveloppe marche sous une forme différentielle.

FIG. 1

```
┌─────────────────────────────────────────────────────────────────┐        201
│  A signal correction system modulates an input signal to obtain a │  ╱
│                       modulated signal                            │
└─────────────────────────────────────────────────────────────────┘
                                │
                                ▼
┌─────────────────────────────────────────────────────────────────┐        202
│  The signal correction system amplifies power of the modulated    │  ╱
│            signal to obtain a first modulated signal              │
└─────────────────────────────────────────────────────────────────┘
                                │
                                ▼
┌─────────────────────────────────────────────────────────────────┐        203
│  The signal correction system compensates for a first partial     │  ╱
│  modulated signal of the first modulated signal to obtain a        │
│  second modulated signal, where power of the second modulated      │
│  signal meets operating power of a first envelope detector         │
└─────────────────────────────────────────────────────────────────┘
                                │
                                ▼
┌─────────────────────────────────────────────────────────────────┐        204
│  The signal correction system collects first envelope             │  ╱
│  information, where the first envelope information is used to       │
│  indicate information about amplitude phase imbalance and direct    │
│  current imbalance of the modulated signal and information about    │
│  spatial leakage of an image signal and a local-frequency signal    │
│  of the modulated signal                                          │
└─────────────────────────────────────────────────────────────────┘
                                │
                                ▼
┌─────────────────────────────────────────────────────────────────┐        205
│  The signal correction system obtains through calculation a        │  ╱
│  quadrature modulation compensation coefficient based on the        │
│               first envelope information                           │
└─────────────────────────────────────────────────────────────────┘
                                │
                                ▼
┌─────────────────────────────────────────────────────────────────┐        206
│  The signal correction system corrects the modulated signal        │  ╱
│  based on the quadrature modulation compensation coefficient       │
└─────────────────────────────────────────────────────────────────┘
```

FIG. 2

First VGA          PA

Modulator

Coupler

Corrector

Second VGA

First envelope
detector tube

DPD feedback
channel

FIG. 3

A signal correction system modulates an input signal to obtain a modulated signal ⌐ 401

The signal correction system amplifies power of the modulated signal to obtain a first modulated signal ⌐ 402

The signal correction system compensates for a first partial modulated signal of the first modulated signal to obtain a second modulated signal, where power of the second modulated signal meets operating power of a first envelope detector ⌐ 403

The signal correction system collects first envelope information, where the first envelope information is used to indicate information about amplitude phase imbalance and direct current imbalance of the modulated signal and information about spatial leakage of an image signal and a local-frequency signal of the modulated signal ⌐ 404

The signal correction system collects second envelope information, where the second envelope information is used to indicate the amplitude phase imbalance and the direct current imbalance of the modulated signal ⌐ 405

The signal correction system obtains through calculation a first correction coefficient based on the second envelope information ⌐ 406

The signal correction system obtains through calculation a spatial leakage factor based on the first envelope information and the second envelope information ⌐ 407

The signal correction system compensates for the first correction coefficient by using the spatial leakage factor, to obtain a quadrature modulation compensation coefficient ⌐ 408

The signal correction system corrects the modulated signal based on the quadrature modulation compensation coefficient ⌐ 409

FIG. 4

FIG. 5

FIG. 6

FIG. 7

**EP 3 605 865 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017080492 A